(19) Europäisches Patentamt
European Patent Office
Office européen des brevets

(11) **EP 3 543 954 B1**

(12) **EUROPEAN PATENT SPECIFICATION**

(45) Date of publication and mention
of the grant of the patent:
**28.04.2021 Bulletin 2021/17**

(51) Int Cl.:
*G06T 7/11* *(2017.01)*     *G06T 7/215* *(2017.01)*
*G06T 7/254* *(2017.01)*     *G06T 7/194* *(2017.01)*
*G06T 7/136* *(2017.01)*

(21) Application number: **19164588.6**

(22) Date of filing: **22.03.2019**

(54) **METHOD OF PROCESSING A VIDEO**

VERFAHREN ZUR VERARBEITUNG EINES VIDEOS

PROCÉDÉ DE TRAITEMENT D'UNE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2018 GB 201804649**

(43) Date of publication of application:
**25.09.2019 Bulletin 2019/39**

(73) Proprietor: **Facit Data Systems Ltd
Worcester WR5 2ZX (GB)**

(72) Inventor: **Hassan, Waqas
Uckfield, TN22 1QL (GB)**

(74) Representative: **Raynor, Simon Mark
Urquhart-Dykes & Lord LLP
Altius House
1 North Fourth Street
Milton Keynes MK9 1DG (GB)**

(56) References cited:
**WO-A1-2015/175201**     **US-A1- 2013 108 105**
**US-B1- 8 300 890**

**Description**

The present invention relates to a method of processing a video comprising a sequence of image frames. In particular, but not exclusively, the invention relates to a method of masking specific features of a video sequence, which is hereinafter referred to as the Facit Identity Cloak Application for Video Surveillance.

**1. Introduction:**

The Facit Identity Cloak application is specifically, but not exclusively, designed and developed for customers using surveillance cameras to record videos for the purpose of security and crime prevention. Under the new GDPR regulation, (Chapter 3, Articles 13, 14 and 15), any person whose image is recorded on a CCTV system has a right to seek and be supplied with a copy of their own personal data from the footage. However, the identity of any other individuals who also feature in any part of that footage needs to be protected when the recording is shared with a third party. Facit Identity Cloak application is designed to protect the identity of any individual. The invention may also be used to mask or obscure identifying features of other objects, for example vehicle registration plates. This document contains details of this application.

**2. Background Knowledge:**

It is generally desirable to protect the identity of any individual in the recorded footage by masking or obscuring identifying features of the individual. The most commonly used method for this purpose is to use a system that detects and masks facial features.

However, it has been observed that in real life scenarios, very few facial features are detected due to camera location, position and quality of image. Also, the detection and tracking of facial features can make large data processing demands.

To overcome this limitation a new colour and motion-based method has been developed, details of which are explained in the following section.

Colour detection is one of the most commonly used techniques in most imaging applications including hand and face tracking or sign language recognition. The challenge is to detect the colour range across all races of individuals, as skin color varies among different races. Moreover lightning conditions and variation of luminance limits are some other factors that pose problem to the skin detection technique [1]. It has also been observed that most of the work that has been carried out so far is in controlled environments, where there is little or no variation in lighting conditions. Another challenge is to remove from the image frames all the items that are not part of the facial feature but fall in the same colour space. Therefore, colour based method on their own are not able to detect the facial features correctly.

In most imaging applications and vision systems including video surveillance[2], [3], traffic monitoring [4], object tracking, human detection or motion detection, one of the fundamental steps is to accurately separate the objects in motion from a video sequence [5]-[7]. The most common technique involved in preprocessing of video sequences in such applications is to get an image or data of the background that includes all the static objects in the camera view over a period of time. Then subtract those from current frame to get all the objects that are in motion. This technique is called background subtraction [8].

The problem faced in most of these algorithms is adaptability to changes in lighting and difference in illumination. The background model fails when there is a sudden change in camera view or lighting condition. In order to achieve accurate results, an updating background model is proposed, which incorporates the movement information as well as illumination changes.

Examples of known video redaction methods are described in US2007/0201694 and US2013/0108105. These methods include the following image processing steps:•

Step 1: build a background model

- Step 2: extract foreground information

- Step 3: Identify areas of the video frames representing objects to mask (for example human faces, vehicle registration plates, etc.)

- Step 4: Track the objects in successive frames of the video sequence

- Step 5: Mask the objects in each of the frames of the video sequence to hide identifying features.

The present invention, as defined below, differs from the methods described in US2007/0201694 and US2013/0108105 at least in steps 3 & 4. Both of the prior art methods attempt to find specific objects within the video sequence and then mask them while simultaneously tracking the objects as they move around in successive frames of the video. In the present invention each video frame is treated as an independent scene, which is searched for areas falling within a particular colour range. Wherever the specified colour range is found that area of the frame is masked. The present invention does not track any object, and hence there is no link or association between consecutive frames. The areas selected for masking can be expanded by adding different colour ranges. In this way it is possible to mask or obscure any area that matches the selected colour range. US8300890 B1 describes a system for person/object screening, in which one or more portions of an image are replaced with other images. The resulting image may include a first portion and one or more other images. In an embodiment, the background of an image can be replaced with another background, and the foreground can be extracted by identifying the background based on an image of the background without any foreground. US2013/108105 A1 describes an apparatus for masking a privacy region based on a monitored video image. The method includes extracting a target object from the video input to detect a privacy masking region; and graphic-processing only the detected privacy masking region of the target object to hide the privacy masking region, thereby hiding the privacy region.

A drawback of the present invention is if there are other objects in the scene that are similar to the selected colour (which may, for example, be a skin colour), those areas will also be masked. However, the invention provides the advantage that it does not require the use of any feature recognition system, such as a facial recognition systems. This makes it possible to perform the masking operation with less computing resources also does not require the user to specify what objects the system is trying to mask. This means that the system can mask all the areas in the image that match the selected colour range. The method is also compatible with older video recording systems that use cameras with analogue output signals.

Another drawback of the system is that it sometimes misses the facial features if they fall outside the set colour range. To overcome these drawbacks, the system allows users to manually add or remove the area of interest to be masked or unmasked by using a frame-by-frame editing feature.

According to one aspect of the present invention there is provided a method of processing a video as defined by the claims.

In an embodiment there is provided a method of processing a video comprising a sequence of image frames comprising arrays of pixels, the method comprising:

- a background modelling step, in which motion information is extracted from a series of images of a scene and any remaining information is summed to create a background model that represents static components of the scene;

- a foreground extraction step, in which the background model is subtracted from at least one image frame to extract a foreground scene that represents moving components of a scene;

- a colour classification step, in which objects within the foreground scene are classified according to whether each of those objects falls inside or outside a defined colour space; and

- a masking step comprising applying a mask to images of one or more objects appearing in the image frames that fall within the defined colour space.

The masking step comprises applying a mask remove identifying features from one or more objects, for example individuals or other objects, appearing in the image frames. Optionally, the method also comprises a mask modification step, comprising manually modifying the mask applied in the masking step. This allows a user to add a mask manually to selected areas of the video to obscure additional areas of interest, or to remove the mask from other areas that do not need to be obscured. This is achieved using a frame-by-frame editing feature

The masking step optionally comprises blurring or obscuring said one or more objects falling within the defined colour space to remove identifying features of those objects. The background modelling step optionally comprises selecting a base image, using motion information in subsequent images to remove pixels representing objects that are in motion, determining a weighted sum of all remaining pixels, and using the weighted sum to update the background model.

The background modelling step optionally further comprising saving every nth frame of the video sequence as a Previous Image, and calculating a Difference Image by comparing a Current Image with the Previous Image.

The background modelling step optionally further comprises removing noise from the difference Image using a smoothing function, for example a Gaussian function, and optionally extracting contours in the Difference Image, and optionally dilating and filling the contours.

The background modelling step optionally further comprises classifying movement pixels and non-movement

**EP 3 543 954 B1**

pixels, calculating a weighted sum, and updating the background model with the weighted sum.

Optionally, the foreground extraction step comprises separating moving foreground objects by subtracting the background model from a Current Image frame of the video sequence.

Optionally, the method further comprises updating the background model after each foreground extraction step.

The colour classification step further comprises classifying foreground objects by identifying foreground objects that fall within a region of the YCbCr colour space satisfying the conditions:

$$Cb > 85 \text{ and } Y > 80$$

and

$$Cr <= (1.5862*Cb)+20$$

and

$$Cr >= (0.345*Cb)+83.8069$$

and

$$Cr >= (-4.5652*Cb)+234.5652$$

and

$$Cr <= (-1.15*Cb)+301.75$$

and

$$Cr <= (-2.2857*Cb)+432.85,$$

where Cr & Cb are chrominance components and Y is the luminance component. Optionally, the method further comprises creating a mask containing only regions of a video frame that fall within the predetermined colour space.

Optionally, the method further comprises applying the mask to obscure the selected regions of the video frame.

Optionally, the colour classification step further comprises using an edge based method to classify objects, wherein optionally the edge based method comprises a Canny edge detection method.

Optionally, the method further comprises selecting a target object in a selected video sequence, extracting pixel positions of the target object from a plurality frames within the video sequence, storing the pixel positions of the target object in the plurality of frames and time information associated with those frames, and predicting the position of the target object in at least one other frame of the video sequence based on the stored pixel positions and time information, and removing the mask from the video sequence in the predicted positions of the target object.

### 3. The Application:

An embodiment of the invention will now be described by way of example with reference to the accompanying drawings, wherein:

Figure 1 is a flow chart illustrating a method of building a background model;

Figure 2 is a flow chart illustrating a method of extracting foreground information, and

Figure 3 illustrates a colour space used in a colour classification process.

4

The proposed application is divided into 4 major sections:

- Background Modelling

- Foreground Extraction

- Colour Classification

- Mask modification (optional)

### 3.1. Background Modelling

The first step of the application is to select a base image for the background model. An ideal base image can be defined as an image which contains the most static objects in the scene. However, this is not always possible, so in the present application we select multiple images according to the number of frames in the video. After separating channels of RGB from each frame, we store each channel separately in a form of a multilayer channel stacks. we take the median of each multilayer channel stack to form a median image for each channel separately and merge them together to form a final median image, which is considered as a background model image. This background model image is used as an initial image for the main processing.

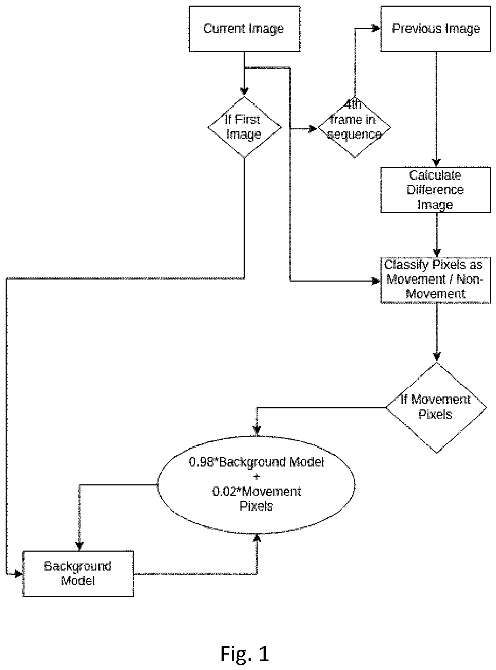

Next, we use motion information in the subsequent images to remove all areas which are currently in motion. A weighted sum of all the remaining pixels, in which there was no movement, is taken with the base image, which subsequently updates the background model. A detailed flow chart is shown below in Figure 1 . Steps of algorithm used in one embodiment of the invention are described below.

**Steps of background model estimation:**

- Selection of Base Image.

- Every $n^{th}$ frame (for example every fourth frame) is saved as the Previous Image.

- Calculate Difference Image of Current Image and Previous Image.

- Remove Noise from Difference Image using Gaussian smoothing function.

- Extract contours in Difference Image.

- Dilation and subsequently filling of contours.

- Classify Movement and Non- Movement Pixels.

- Calculate weighted sum.

- Update background model.

A Flow Diagram of Background Model is shown in Figure 1

The background model is created such that only stationary regions of the frame are added. Any moving regions within the frame are ignored. This makes the background model robust and insensitive to any change. This process is continued until the background model is matured.

### 3.2. Foreground Extraction:

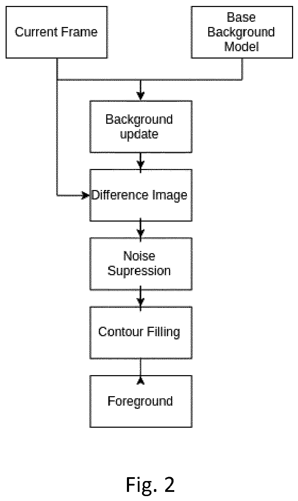

The next step is to separate all the moving foreground objects from the video footage. This is achieved by subtracting the current frame with the background model generated in the previous setup. A background model selected in the previous step, is used as reference image. On each iteration, the background model is updated. The updated background model is matched with the current frame to extract the foreground. The flow chart of foreground extraction process is described in Fig. 2.

### 3.3. Colour Classification:

The next step is to classify foreground objects. This process is carried out using colour classification method. The color spaces that can be used in such conditions include YUV, YCbCr, YIQ, RGB, HSV [10]. It is important to note that colour alone can result in false classification due to variable lighting conditions [9].Hence a more robust edge based method has been combined with the colour classification to classify objects of interests. In our model we are incorporating YCbCr color space to classify the pixel and then combine it with a Canny [11] edge detection method.

### 3.3.1. YCbCr (Luminance, Chrominance) Color Model:

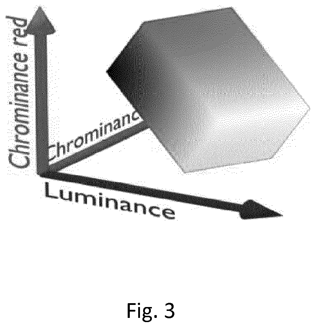

As illustrated in Figure 3, YCbCr is a color space that consists of an encoded non-linear RGB signal [12]. The use of this color space is commonly employed in digital video domain in video compression standards like JPEG, MJPEG-1, MJPEG-2 and MJPEG-4 as redundant color information can be extracted using this representation. The Y component is luma that represents the brightness of an image, and has a non-linear relationship with the RGB values. The color information in this colour model is represented using Cb and Cr components called chroma. Cb corresponds to blue minus luma and Cr corresponds to red minus luma [13].

A YCbCr Color space model is shown in Fig. 3

Using Equation 1 to Equation 3, we can compute the values of Y Cb Cr from given RGB values.

$$Y = 0.299R + 0.287G + 0.11B \ldots\ldots\ldots\ldots (1)$$

$$Cr = R - Y \ldots\ldots\ldots\ldots\ldots\ldots\ldots\ldots\ldots (2)$$

$$Cb = B - Y\ldots\ldots\ldots\ldots\ldots\ldots\ldots\ldots\ldots (3)$$

To separate regions of interest we are using following thresholds of Y, Cb and Cr

$$Cb > 85 \text{ and } Y > 80$$

and

$$Cr <= (1.5862*Cb)+20$$

and

$$Cr>=(0.345*Cb)+83.8069$$

and

$$Cr >= (-4.5652*Cb)+234.5652$$

and

$$Cr <= (-1.15*Cb)+301.75$$

and

$$Cr <= (-2.2857 * Cb) + 432.85$$

where Cr & Cb are chrominance components and Y is the luminance component. Resultant mask is created containing only those regions that fall in the above range. This mask is subsequently used in the final step to blur all the faces in the output video sequence.

### 3.4. Mask Modification

The application allows users to manually mask/unmask areas of the image (for example, containing individuals). Due to variable lighting, poor video quality and/or camera position, there is possibility either that areas which are not of interest are masked automatically, or that a mask is not applied to areas of interest that need to be obscured. To overcome these situation, an optional mask modification step is provided, which allows a mask to be applied manually to additional areas of the image, and/or allows the automatically applied mask to be removed from areas that are not of interest, to provide in such situations an improved output video sequence.

### 3.5. User Input for Selection of Person

The main functionality of the application is to identify individuals in the video sequence and hide their identity by using the blur method (comprising blurring or masking specific regions of the image to remove identifying features). However, for security purposes there is a requirement to keep one or more individuals identifiable. This feature is important when there is a need to share the video sequence with third party. For this purpose, user can identify any individual (or target object) in the selected video sequence. The pixel positions of the selected individual's face are extracted from the key frames and are stored along with the time information. A mathematical relation between frame number and pixel position is formulated, based on which face positions in rest of the frames are predicted.

For example, in two key frames, keyframe 1 and keyframe 2 the position in key frame 1 is ($X_1$, $Y_1$) and keyframe 2 is ($X_2$, $Y_2$). The predicted position is ($X_p$, $Y_p$) at nth frame is

$$X_p = X_1 * \left(1 - \frac{nFrame}{keyFrame2 - keyFrame1}\right) + X_2 * \left(\frac{nFrame}{keyFrame2 - keyFrame1}\right)$$

$$Y_p = slope * X_p + c$$

Where,

$$slope = \frac{Y_2 - Y_1}{X_2 - X_1}$$

$$c = Y_2 - \frac{X_2}{slope}$$

Using the above equations, the position of a person is predicted in real time with reference to the current frame. Using this position, the pixel area is kept blur or unblur according to the requirement to hide or show the identity of the individual.

### References

[1] Z. Hamid Al-Tairi, R. Wirza, M. I. Saripan, and P. Sulaiman, "Skin segmentation using YUV and RGB color spaces," J. Inf. Process. Syst., vol. 10, pp. 283-299, Jun. 2014.

[2] O. Barnich and M. V. Droogenbroeck, "ViBE: A powerful random technique to estimate the background in video sequences," in 2009 IEEE International Conference on Acoustics, Speech and Signal Processing, 2009, pp. 945-948.

[3] M. Van Droogenbroeck and O. Barnich, "Visual Background Extractor," Aug. 2011.

[4] A. M. McIvor, "Background subtraction techniques," Proc Image Vis. Comput., vol. 4, pp. 3099-3104, 2000.

[5] R. J. Radke, S. Andra, O. Al-Kofahi, and B. Roysam, "Image change detection algorithms: a systematic survey," IEEE Trans. Image Process., vol. 14, no. 3, pp. 294-307, Mar. 2005.

[6] Y. Benezeth, P. M. Jodoin, B. Emile, H. Laurent, and C. Rosenberger, "Review and evaluation of commonly-implemented background subtraction algorithms," in 2008 19th International Conference on Pattern Recognition, 2008, pp. 1-4.

[7] S. Elhabian, K. M. El-Sayed, and S. H. Ahmed, "Moving Object Detection in Spatial Domain Using Background Removal Techniques-State-of-Art," Recent Pat. Comput. Sci., vol. 1, pp. 32-54, Jan. 2008.

[8] K. Kavitha, VIBE: Background Detection and Subtraction for Image Sequences in Video..

[9] S. Kolkur, D. Kalbande, P. Shimpi, C. Bapat, and J. Jatakia, "Human Skin Detection Using RGB, HSV and YCbCr Color Models," ArXiv170802694 Cs Q-Bio, 2017.

[10] A. Elgammal, C. Muang, and D. Hu, "Skin detection-a short tutorial," Encycl. Biom., pp. 1-10, 2009.

[11] Canny, J., A Computational Approach to Edge Detection, IEEE Trans. Pattern Analysis and Machine Learning, 8(6):679-698, 1986.

[12] B. D. Zarit, B. J. Super, and F. K. H. Quek, "Comparison of five color models in skin pixel classification," in International Workshop on Recognition, Analysis, and Tracking of Faces and Gestures in Real-Time Systems, 1999. Proceedings, 1999, pp. 58-63.

[13] R. G, "Integrated Feature Extraction for Image Retrieval," Nov. 2017.

## Claims

1. A computer-implemented method of processing a video comprising a sequence of image frames comprising arrays of pixels, the method comprising:

   • a background modelling step, in which motion information is extracted from a series of images of a scene and any remaining information is summed to create a background model that represents static components of the scene;
   • a foreground extraction step, in which the background model is subtracted from at least one image frame to extract a foreground scene that represents moving components of a scene;
   • a colour classification step, in which objects within the foreground scene are classified according to whether each of those objects falls inside or outside a defined colour space; and
   • a masking step comprising applying a mask to images of one or more objects appearing in the image frames that fall within the defined colour space;

   **characterised in that** the colour classification step further comprises classifying foreground objects by identifying foreground objects that fall within a region of the YCbCr colour space satisfying the conditions:

   $$Cb > 85 \text{ and } Y > 80$$

   and

   $$Cr <= (1.5862*Cb)+20$$

   and

   $$Cr>=(0.345*Cb)+83.8069$$

and

$$Cr >= (-4.5652*Cb)+234.5652$$

and

$$Cr <= (-1.15*Cb)+301.75$$

and

$$Cr <= (-2.2857*Cb)+432.85,$$

where Cr & Cb are chrominance components and Y is the luminance component.

2. A method according to claim 1, wherein the masking step comprises blurring or obscuring said one or more objects that fall within the defined colour space, to remove features of those objects.

3. A method according to claim 1 or 2, further comprising a mask modification step, comprising manually modifying the mask applied in the masking step

4. A method according to any preceding claim, wherein the background modelling step comprises selecting a base image, using motion information in subsequent images to remove pixels representing objects that are in motion, determining a weighted sum of all remaining pixels, and using the weighted sum to update the background model.

5. A method according to claim 4, the background modelling step further comprising saving every nth frame of the video sequence as a Previous Image, and calculating a Difference Image by comparing a Current Image with the Previous Image.

6. A method according to claim 4 or 5, the background modelling step further comprising removing noise from the Difference Image using a smoothing function, and optionally extracting contours in the Difference Image, and optionally dilating and filling the contours.

7. A method according to any of claims 4 to 6, the background modelling step further comprising classifying movement pixels and non-movement pixels.

8. A method according to any previous claim, wherein the foreground extraction step comprises separating moving foreground objects by subtracting the background model from a Current Image frame of the video sequence.

9. A method according to claim 8, further comprising updating the background model after each foreground extraction step.

10. A method according to any preceding claim, further comprising creating a mask containing only regions of a video frame that fall within the predetermined colour space.

11. A method according to any preceding claim, further comprising applying the mask to obscure the selected regions of the video frame.

12. A method according to any preceding claim, wherein the colour classification step further comprises using an edge based method to classify objects, wherein optionally the edge based method comprises a Canny edge detection method.

13. A method according to any preceding claim, further comprising selecting a target object in a selected video sequence, extracting pixel positions of the target object from a plurality frames within the video sequence, storing the pixel positions of the target object in the plurality of frames and time information associated with those frames, and predicting the position of the target object in at least one other frame of the video sequence based on the stored pixel positions and time information, and removing the mask from the video sequence in the predicted positions of the target object.

**Patentansprüche**

1. Computerimplementiertes Verfahren zur Verarbeitung eines Videos, das eine Folge von Einzelbildern umfasst, die Anordnungen von Pixeln umfassen, wobei das Verfahren folgendes umfasst:

• einen Hintergrundmodellierungsschritt, in dem Bewegungsinformationen aus einer Reihe von Bildern einer Szene extrahiert werden, und wobei die verbleibenden Informationen summiert werden, um ein Hintergrundmodell zu erzeugen, das statische Komponenten der Szene darstellt;
• einen Vordergrundextrahierungsschritt, in dem das Hintergrundmodell von mindestens einem Einzelbild subtrahiert wird, um eine Vordergrundszene zu extrahieren, die sich bewegende Komponenten einer Szene darstellt;
• einen Farbklassifizierungsschritt, in dem Objekte in der Vordergrundszene danach klassifiziert werden, ob jedes dieser Objekte in einen definierten Farbraum fällt oder außerhalb dessen; und
• einen Maskierungsschritt, der das Anwenden einer Maske auf Bilder eines oder mehrerer Objekte umfasst, die in den Einzelbildern erscheinen, die in den definierten Farbraum fallen;

**dadurch gekennzeichnet, dass** der Farbklassifizierungsschritt ferner das Klassifizieren von Vordergrundobjekten durch Identifizieren von Vordergrundobjekten umfasst, die in einen Bereich des YCbCr-Farbraums fallen, wobei folgende Bedingungen erfüllt sind:

$$Cb > 85 \text{ und } Y > 80$$

und

$$Cr <= (1{,}5862 * Cb) + 20$$

und

$$Cr >= (0{,}345 * Cb) + 83{,}8069$$

und

$$Cr >= (-4{,}5652 * Cb) + 234{,}5652$$

und

$$Cr <= (-1{,}15 * Cb) + 301{,}75$$

und

$$Cr <= (-2{,}2857 * Cb) + 432{,}85,$$

wobei Cr und Cb Chrominanzkomponenten sind, und wobei Y die Luminanzkomponente ist.

2. Verfahren nach Anspruch 1, wobei der Maskierungsschritt das Verwischen oder Verschleiern des einen oder mehrerer Objekte umfasst, die in den definierten Farbraum fallen, um Merkmale dieser Objekte zu entfernen.

3. Verfahren nach Anspruch 1 oder 2, das ferner einen Maskenmodifikationsschritt umfasst, der das manuelle Modifizieren der in dem Maskierungsschritt angewendeten Maske umfasst.

4. Verfahren nach einem der vorstehenden Ansprüche, wobei der Hintergrundmodellierungsschritt das Auswählen eines Grundbilds umfasst, wobei Bewegungsinformationen in aufeinanderfolgenden Bildern verwendet werden, um Pixel zu entfernen, die Objekte darstellen, die sich in Bewegung befinden, wobei eine gewichtete Summe aller verbleibenden Pixel gebildet wird, und wobei die gewichtete Summe zur Aktualisierung des Hintergrundmodells verwendet wird.

5. Verfahren nach Anspruch 4, wobei der Hintergrundmodellierungsschritt ferner das Speichern jedes n-ten Einzelbilds der Videosequenz als ein vorheriges Bild umfasst sowie das Berechnen eines Differenzbilds durch Vergleichen des aktuellen Bilds mit dem vorherigen Bild.

6. Verfahren nach Anspruch 4 oder 5, wobei der Hintergrundmodellierungsschritt ferner das Entfernen von Rauschen aus dem Differenzbild unter Verwendung einer Glättungsfunktion umfasst, und optional das Extrahieren von Konturen in dem Differenzbild, sowie optional das Erweitern und Füllen der Konturen.

7. Verfahren nach einem der Ansprüche 4 bis 6, wobei der Hintergrundmodellierungsschritt ferner das Klassifizieren von Bewegungspixeln und Nicht-Bewegungspixeln umfasst.

8. Verfahren nach einem der vorstehenden Ansprüche, wobei der Vordergrundextrahierungsschritt das Separieren sich bewegender Vordergrundobjekte durch Subtrahieren des Hintergrundmodells von einem Einzelbild des aktuellen Bilds der Videosequenz umfasst.

9. Verfahren nach Anspruch 8, das ferner das Aktualisieren des Hintergrundmodells nach jedem Vordergrundextrahierungsschritt umfasst.

10. Verfahren nach einem der vorstehenden Ansprüche, das ferner das Erzeugen einer Maske umfasst, die nur Bereiche eines Videobilds enthält, die in den vorbestimmten Farbraum fallen.

11. Verfahren nach einem der vorstehenden Ansprüche, das ferner das Anwenden der Maske zur Verschleierung der ausgewählten Bereiche des Videobilds umfasst.

12. Verfahren nach einem der vorstehenden Ansprüche, wobei der Farbklassifizierungsschritt ferner das Verwenden eines kantenbasierten Verfahrens zur Klassifizierung von Objekten umfasst, wobei das kantenbasierte Verfahren optional ein Canny-Kantendetektionsverfahren umfasst.

13. Verfahren nach einem der vorstehenden Ansprüche, das ferner das Auswählen eines Zielobjekts in einer ausgewählten Videosequenz umfasst, das Extrahieren von Pixelpositionen des Zielobjekts aus einer Mehrzahl von Einzelbildern in der Videosequenz, das Speichern der Pixelpositionen des Zielobjekts in der Mehrzahl von Einzelbildern sowie von diesen Einzelbildern zugeordneten Zeitinformationen, und das Vorausberechnen der Position des Zielobjekts in mindestens einem anderen Einzelbild der Videosequenz auf der Basis der gespeicherten Pixelpositionen und Zeitinformationen, und das Entfernen der Maske von der Videosequenz an den vorausberechneten Positionen des Zielobjekts.

**Revendications**

1. Procédé mis en œuvre par ordinateur pour traiter une vidéo comprenant une séquence de trames d'image comprenant des réseaux de pixels, le procédé comprenant :

• une étape de modélisation d'arrière-plan, dans laquelle des informations de mouvement sont extraites d'une série d'images d'une scène et toute information restante est additionnée pour créer un modèle d'arrière-plan qui représente les composants statiques de la scène ;
• une étape d'extraction de premier plan, dans laquelle le modèle d'arrière-plan est soustrait d'au moins une trame d'image pour extraire une scène de premier plan qui représente les composants mobiles d'une scène ;
• une étape de classification des couleurs, dans laquelle les objets dans la scène de premier plan sont classés selon que chacun de ces objets se trouve à l'intérieur ou à l'extérieur d'un espace de couleur défini ; et

• une étape de masquage comprenant l'application d'un masque aux images d'au moins un objet apparaissant dans les trames d'image qui se situent dans l'espace de couleur défini ;

**caractérisé en ce que** l'étape de classification des couleurs comprend en outre la classification des objets de premier plan en identifiant les objets de premier plan qui se trouvent dans une région de l'espace de couleur YCbCr satisfaisant aux conditions :

$$Cb > 85 \text{ et } Y > 80$$

et

$$Cr <= (1{,}5862*Cb)+20$$

et

$$Cr >= (0{,}345*Cb)+83{,}8069$$

et

$$Cr >= (-4{,}5652*Cb)+234{,}5652$$

et

$$Cr <= (-1{,}15*Cb)+301{,}75$$

et

$$Cr <= (-2{,}2857*Cb)+432{,}85,$$

Cr et Cb étant les composantes de chrominance et Y étant la composante de luminance.

2. Procédé selon la revendication 1, l'étape de masquage comprenant le floutage ou l'obscurcissement dudit au moins un objet qui tombe dans l'espace de couleur défini, pour supprimer les caractéristiques de ces objets.

3. Procédé selon la revendication 1 ou 2, comprenant en outre une étape de modification de masque, comprenant la modification manuelle du masque appliqué dans l'étape de masquage.

4. Procédé selon l'une quelconque des revendications précédentes, l'étape de modélisation d'arrière-plan comprenant la sélection d'une image de base, l'utilisation d'informations de mouvement dans des images subséquentes pour supprimer des pixels représentant des objets qui sont en mouvement, la détermination d'une somme pondérée de tous les pixels restants, et l'utilisation de la somme pondérée pour mettre à jour le modèle d'arrière-plan.

5. Procédé selon la revendication 4, l'étape de modélisation d'arrière-plan comprenant en outre la sauvegarde de chaque nième trame de la séquence vidéo en tant qu'Image précédente, et le calcul d'une Image de différence en comparant une Image actuelle à l'Image précédente.

6. Procédé selon la revendication 4 ou 5, l'étape de modélisation d'arrière-plan comprenant en outre l'élimination du bruit de l'Image de différence en utilisant une fonction de lissage, et éventuellement l'extraction de contours dans l'Image de différence, et éventuellement la dilatation et le remplissage des contours.

7. Procédé selon l'une quelconque des revendications 4 à 6, l'étape de modélisation d'arrière-plan comprenant en outre la classification des pixels de mouvement et des pixels de non-mouvement.

8. Procédé selon l'une quelconque des revendications précédentes, l'étape d'extraction de premier plan comprenant la séparation d'objets d'avant-plan mobiles en soustrayant le modèle d'arrière-plan d'une trame d'Image actuelle de la séquence vidéo.

9. Procédé selon la revendication 8, comprenant en outre la mise à jour du modèle d'arrière-plan après chaque étape d'extraction de premier plan.

10. Procédé selon l'une quelconque des revendications précédentes, comprenant en outre la création d'un masque contenant uniquement des régions d'une trame vidéo qui entrent dans l'espace de couleur prédéterminé.

11. Procédé selon l'une quelconque des revendications précédentes, comprenant en outre l'application du masque pour masquer les régions sélectionnées de la trame vidéo.

12. Procédé selon l'une quelconque des revendications précédentes, l'étape de classification des couleurs comprenant en outre l'utilisation d'un procédé basé sur les bords pour classifier les objets, éventuellement, le procédé basé sur les bords comprenant un procédé de détection des bords de Canny.

13. Procédé selon l'une quelconque des revendications précédentes, comprenant en outre la sélection d'un objet cible dans une séquence vidéo sélectionnée, l'extraction de positions de pixels de l'objet cible à partir d'une pluralité de trames dans la séquence vidéo, le stockage des positions de pixels de l'objet cible dans la pluralité de trames et d'informations temporelles associées à ces trames, et la prédiction de la position de l'objet cible dans au moins une autre trame de la séquence vidéo en fonction des positions de pixels et des informations temporelles stockées, et la suppression du masque de la séquence vidéo dans les positions prédites de l'objet cible.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070201694 A
- US 20130108105 A
- US 8300890 B1
- US 2013108105 A1

### Non-patent literature cited in the description

- **Z. HAMID AL-TAIRI ; R. WIRZA ; M. I. SARIPAN ; P. SULAIMAN.** Skin segmentation using YUV and RGB color spaces. *J. Inf. Process. Syst.,* June 2014, vol. 10, 283-299
- **O. BARNICH ; M. V. DROOGENBROECK.** ViBE: A powerful random technique to estimate the background in video sequences. *2009 IEEE International Conference on Acoustics, Speech and Signal Processing,* 2009, 945-948
- **M. VAN DROOGENBROECK ; O. BARNICH.** *Visual Background Extractor,* August 2011
- **A. M. MCLVOR.** Background subtraction techniques. *Proc Image Vis. Comput.,* 2000, vol. 4, 3099-3104
- **R. J. RADKE ; S. ANDRA ; O. AL-KOFAHI ; B. ROYSAM.** Image change detection algorithms: a systematic survey. *IEEE Trans. Image Process.,* March 2005, vol. 14 (3), 294-307
- **Y. BENEZETH ; P. M. JODOIN ; B. EMILE ; H. LAURENT ; ROSENBERGER.** Review and evaluation of commonly-implemented background subtraction algorithms. *2008 19th International Conference on Pattern Recognition,* 2008, 1-4
- **S. ELHABIAN ; K. M. EI-SAYED ; S. H. AHMED.** Moving Object Detection in Spatial Domain Using Background Removal Techniques-State-of-Art. *Recent Pat. Comput. Sci.,* January 2008, vol. 1, 32-54
- **K. KAVITHA.** *VIBE: Background Detection and Subtraction for Image Sequences in Video.*
- **S. KOLKUR ; D. KALBANDE ; P. SHIMPI ; C. BAPAT ; J. JATAKIA.** *Human Skin Detection Using RGB, HSV and YCbCr Color Models,* 2017
- **A. ELGAMMAL ; C. MUANG ; D. HU.** Skin detection-a short tutorial. *Encycl. Biom.,* 2009, 1-10
- **CANNY, J.** A Computational Approach to Edge Detection. *IEEE Trans. Pattern Analysis and Machine Learning,* 1986, vol. 8 (6), 679-698
- **B. D. ZARIT ; B. J. SUPER ; F. K. H. QUEK.** Comparison of five color models in skin pixel classification,'' in International Workshop on Recognition, Analysis, and Tracking of Faces and Gestures in Real-Time Systems, 1999. *Proceedings,* 1999, 58-63
- **R. G.** *Integrated Feature Extraction for Image Retrieval,* November 2017